# EUROPÄISCHE PATENTSCHRIFT

(11) **EP 2 246 181 B1**
(45) Veröffentlichungstag und Bekanntmachung des Hinweises auf die Patenterteilung: **29.08.2012**
(21) Anmeldenummer: 10153909.6
(22) Anmeldetag: 18.02.2010
(51) Int. Cl.: B32B 1/02, B32B 15/08, B32B 25/08, B32B 15/20, B32B 25/14, B32B 27/32, B32B 7/12, F28D 20/00, F24H 1/18

(54) **Verbundmaterial und dessen Verwendung**
Compound material and its use
Matériau composite et son utilisation

(30) Priorität: 29.04.2009 DE 102009003849
(43) Veröffentlichungstag der Anmeldung: 03.11.2010
(73) Patentinhaber: ContiTech Elastomer-Beschichtungen GmbH, 30165 Hannover (DE)
(72) Erfinder: Storre, Jens, 37176 Nörten-Hardenberg (DE); Blomeyer, Karl-Heinz, 37194 Bodenfelde (DE)
(74) Vertreter: Finger, Karsten

(56) Entgegenhaltungen:
- EP-A2- 0 282 853
- US-A- 4 213 487

## Beschreibung

### Verbundmaterial und dessen Verwendung

Die Erfindung betrifft ein Verbundmaterial, aufweisend einen Schichtaufbau aus Elastomerlagen, Kunststofflagen und Metallfolien. Ferner betrifft die Erfindung die Verwendung eines solchen Verbundmaterials.

Die effiziente Speicherung von Wärmeenergie, insbesondere Sonnenenergie, ist - auch aufgrund der globalen CO₂-Problematik - ein Thema, dem derzeit große Beachtung geschenkt wird.

Bei der Nutzung von Sonnenenergie verwendet man üblicherweise thermoisolierte Wärmespeicher mit Wasser als wärmespeicherndem Medium. Wegen der unregelmäßigen Sonneneinstrahlungszeiten, ist man dabei bestrebt, die Speicher für die Wärmegewinnung möglichst groß zu dimensionieren, damit auch Perioden geringer Sonneneinstrahlung, wie nachts oder im Winter, überbrückt werden können. Auch werden Solarkollektoren vermehrt nicht nur zur Warmwasserbereitung, sondern auch für die Unterstützung der zentralen Heizungsanlage genutzt, so dass Wärmespeicher mit Fassungsvermögen von 300 bis 500 L zur Versorgung eines Einfamilienhauses mit Warmwasser und Heizungsenergie allein über Solarkollektoren in der Regel nicht ausreicht.

Bei derzeit verwendeten Wärmespeichern kann es sich um Metallbehälter handeln. Diese weisen jedoch die Nachteile eines hohen Gewichts, hoher Korrosionsanfälligkeit, großer Sperrigkeit und limitierten Größen auf. Ferner sind diese Behälter sehr teuer.

Alternativ zu den Metallbehältern können auch Kunststoffbehälter beispielsweise aus Polypropylen verwendet werden. Diese Behälter sind ebenfalls sehr sperrig und sind nur in limitierten Größen erhältlich.

Benutzt man statt der festen Kunststoff- oder Metallbehälter flexible Behälter aus Elastomerlagen, diffundiert Wasser durch die Elastomerlagen hindurch und es kann zur Schimmelbildung in der Isolierung kommen.

Aus der DE 28 55 911 A1 sind thermoisolierte Wärmespeicher mit einem Fassungsvermögen von mehr als 1500 L bekannt. Diese Wärmespeicher enthalten Wasser als Speichermedium. Sie können aus einem Zylinder aus Polyurethanhartschaumstoff gebildet sein, wobei die Innenflächen des Zylinders eine Auskleidung aus hochpolierter Aluminiumfolie aufweisen. Diese Auskleidung kann auf die Art erfolgen, dass das wärmespeichernde Medium sich in einem Foliensack befindet, der an den Innenwandungen des Zylinders anliegt, wobei der Foliensack aus einer innen mit hochpolierter Aluminiumfolie kaschierten Kunststofffolie besteht. Die in der DE 28 55 911 A1 beschriebenen Wärmespeicher mit Zylindern aus Polyurethanhartschaumstoff weisen jedoch den Nachteil auf, dass sie sehr sperrig und in der Form nicht flexibel sind. Benutzt man zunächst nur den in der DE 28 55 911 A1 beschriebenen, flexiblen Foliensack, um in enge und verwinkelte Aufstellräume zu gelangen, und ummantelt den Foliensack im Anschluss mit flexiblem Isoliermaterial, hat sich gezeigt, dass das Material des Foliensack verletzungsanfällig ist. Es entstehen schnell Risse und Löcher bei Kontakt mit härteren Gegenständen.

Zur Umwicklung von isolierten Rohren wird in der US 4,213,487 ein Verbundmaterial umfassend eine erste Lage aus chloriertem Polyethylen als polarem Kautschuk, eine erste Haftvermittlerlage, eine Metallfolie, eine zweite Haftvermittlerlage und eine zweite Lage aus chloriertem Polyethylen. Das Verbundmaterial weist außen einen polaren Kautschuk auf und steht nicht unmittelbarem Kontakt mit dem flüssigen Medium. Als alternative Materialien für die erste Lage werden neben chloriertem Polyethylen chlorsulfoniertes Polyethylen, Polyvinylchlorid, Polychloropren, Polyisobutylen und Polyvinylfluorid vorgeschlagen.

Der Erfindung liegt nun die Aufgabe zu Grunde, ein Verbundmaterial bereitzustellen, das sich zu einem dreidimensionalen, flexiblen Behälter verarbeiten lässt, sich durch eine hohe Wasserdampfdiffusionsdichtigkeit auszeichnet und verletzungsresistent ist.

Gelöst wird diese Aufgabe erfindungsgemäß durch ein Verbundmaterial, das zumindest folgenden Schichtaufbau in der angegebenen Reihenfolge aufweist:
- eine erste Elastomerlage, basierend auf einem unpolaren Kautschuk,
- eine erste Kunststofflage, basierend auf einem Kunststoff mit einem Schmelzpunkt von 80 bis 180 °C,
- ggf. eine erste Klebstoffschicht,
- eine Metallfolie,
- ggf. eine zweite Klebstoffschicht,
- eine zweite Kunststofflage, basierend auf einem Kunststoff mit einem Schmelzpunkt von 80 bis 180 °C,
- eine zweite Elastomerlage, basierend auf einem unpolaren Kautschuk, dadurch gekennzeichnet, dass der un polare Kautschuk ein Ethylen-Propylen-Dienkautschuk oder ein Ethylen-Propylen-Kautschuk ist.

Die Einbindung der Metallfolie in das Verbundmaterial verhindert, dass Wasser durch das Verbundmaterial hindurch diffundieren kann. Die Verwendung einer Metallfolie, die beidseitig mit Kunststofflagen, basierend auf einem Kunststoff mit einem Schmelzpunkt von 80 bis 180 °C, versehen ist, bewirkt eine gute Lagenbindung zwischen allen Lagen des Verbundmaterials. Dies ist vermutlich darin zu begründen, dass es während des Prozesses des Aufbringens der unvulkanisierten Kautschukmischungslagen, dem so genannten Kalandrieren, bereits zu einer Anbindung des Kunststoffs an die Kautschukmischung kommt. Aufgrund dieser guten Lagenbindung ist es möglich, dass Verbundmaterial zu einem dreidimensionalen, flexiblen Behälter zu verarbeiten, ohne dass es zu Lagentrennungen und Fehlstellen kommt. Das erfindungsgemäße Verbundmaterial hält auch stärkeren Belastungen stand und reißt nicht so schnell ein.

Die Kunststofflagen können über Klebstoffschichten mit der Metallfolie verbunden sein. Dabei kann es sich z. B. um Klebstoffschichten auf der Grundlage eines Schmelzklebers handeln.

Neben dem genannten Schichtaufbau kann das Verbundmaterial an einer oder beiden Seiten noch weitere Schichten oder Lagen z. B. aus Festigkeitsträgern aufweisen.

Wird das Verbundmaterial für die Herstellung eines flexiblen Behälters, insbesondere für die Lagerung von Heißwasser, verwendet, lassen sich diese Behälter auch in bestehende - insbesondere ältere - Gebäude Heißwasserspeicher installieren, ohne auf bauliche Veränderungen zurückgreifen zu müssen. Insbesondere lassen sich über den Einsatz dieser flexiblen Behälter auch Heißwasserspeicher mit einem Volumen von mehr als 1000 L selbst in kleinen und/oder verwinkelten Kellern aufstellen. Dies ist mit starren Systemen z. B. aus Metall oder Polypropylen kaum möglich.

Zusätzlich können mehrere flexible Behälter als Speicher leicht kombiniert werden und auch ein Einbau von z. B. Wärmetauschern ist möglich.

Die Metallfolie kann aus unterschiedlichen Metallen oder Metalllegierungen, wie Stahl oder Messing, bestehen. Vorzugsweise wird jedoch eine Aluminiumfolie eingesetzt, die kommerziell erhältlich ist und die Herstellung besonders dünner Schichtdicken erlaubt.

Die Metallfolie weist vorzugsweise von Schichtdicke von 0,005 bis 0,1 mm, vorzugsweise 0,01 bis 0,05 mm, auf. Bei Schichtdicken von mehr als 0,1 mm ist das Verbundmaterial nicht mehr sehr flexibel. Bei Schichtdicken unter 0,005 mm kann es zu einem Reißen der Metallfolie beim Kalandrieren kommen.

Die beiden Kunststofflagen basieren auf einem Kunststoff mit einem Schmelzpunkt von 80 bis 180 °C, vorzugsweise 90 bis 130 °C. Die einzelnen Kunststofflagen können dabei auf unterschiedlichen Kunststoffen basieren. Bevorzugt basieren sie allerdings auf den gleichen Kunststoffen.

Als Kunststoffe für die Kunststofflagen können unterschiedlichste Stoffe, wie z. B. Polyethylen in verschiedenen Modifikationen (PE-LLd, PE-LD, PE-HD, HMW-PE, UHMW-PE) oder Polypropylen (Iso-, Syndio- oder ataktische Typen), eingesetzt werden. Gemäß einer vorteilhaften Weiterbildung der Erfindung ist der Kunststoff jedoch ein Polyethylen, welches sich gut verarbeiten lässt und eine gute Anbindung an die Elastomerlagen ermöglicht.

Gemäß einer vorteilhaften Weiterbildung der Erfindung weisen die beiden Kunststofflagen eine Schichtdicke von 5 bis 100 µm, vorzugsweise 10 bis 50 µm, auf. Bei Schichtdicken von mehr als 100 µm wird der Verbund immer steifer und es geht etwas von der Flexibilität verloren.

Die beiden Elastomerlagen basieren auf einem unpolaren Kautschuk, weil derartige Kautschuke besonders wasserbeständig, insbesondere heißwasserbeständig, sind. Die Kautschukmischungen der Elastomerlagen können weitere übliche Bestandteile, wie z. B. Alterungs- und Lichtschutzmittel, Stearinsäure, Aktivatoren, weitere Füllstoffe und Weichmacher, in üblichen Mengen enthalten.

Die einzelnen Elastomerlagen können auf unterschiedlichen unpolaren Kautschuken basieren. Verfahrenstechnisch von Vorteil ist allerdings die Verwendung der gleichen

Mischung für beide Elastomerlagen. Unverträglichkeiten zwischen den Kautschukmischungen werden dabei vermieden.

Es hat sich als besonders vorteilhaft erwiesen, wenn der unpolare Kautschuk peroxidisch vernetzt wird. Auf diese Weise kann bei der Vulkanisation des Verbundmaterials auch eine chemische Bindung zwischen Kunststofflage und Elastomerlage erzielt werden.

Als unpolarer Kautschuk wird ein Ethylen-Propylen-Dienkautschuk oder ein Ethylen-Propylen-Kautschuk angesetzt. Diese Kautschuktypen zeichnen sich durch eine gute Hitze- und Dampfbeständigkeit und eine geringe Wasseraufnahme aus.

Die beiden Elastomerlagen des Verbundmaterials weisen bevorzugt eine Schichtdicke von 0,1 bis 10 mm auf. Besonders dünne Schichtdicken finden dann Anwendung, wenn das Verbundmaterial noch mit weiteren Lagen oder Schichten, beispielsweise aus Festigkeitsträgerlagen, versehen wird. Für flexible Behälter haben sich Schichtdicken von 0,5 bis 3 mm als vorteilhaft erwiesen.

Das erfindungsgemäße Verbundmaterial kann nach dem Fachmann bekannten Verfahren hergestellt und vulkanisiert werden.

Das erfindungsgemäße Verbundmaterial kann überall eingesetzt werden, wo wässrige, insbesondere heiße, Medien gespeichert werden sollen. Das Verbundmaterial kann dabei noch mit weiteren Lagen oder Schichten ober- und/oder unterhalb des erfindungsgemäßen Aufbaus versehen werden. Vorzugsweise wird das erfindungsgemäße Verbundmaterial für flexible Behälter für die Lagerung von Heißwasser verwendet. Eine flexibel einsetzbare effektive Wärmespeicherung von durch Solarkollektoren erwärmtem Wasser wird dadurch möglich.

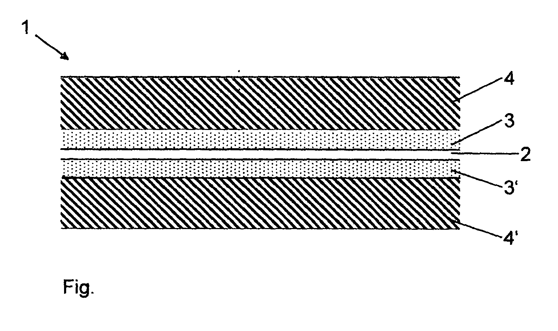

Im Folgenden wird die Erfindung anhand eines vorteilhaften Ausführungsbeispiels unter Bezugnahme auf die beigefügte Figur näher erläutert.

Die einzige Figur zeigt schematisch ein erfindungsgemäßes Verbundmaterial 1 aus einer ca. 0,025 mm dicken Aluminiumfolie 2, die zwischen ca. 0,035 mm dicken Kunststofflagen 3,3' aus Polyethylen angeordnet ist. Außen befinden sich zwei Elastomerlagen 4, 4' mit einer Schichtdicke von ca. 0,8 mm. Die Anbindung der Kunststofflagen 3, 3' an die Aluminiumfolie 2 kann ggf. über ein Klebesystem erfolgen.

Die Elastomerlagen 4, 4' bestehen aus einer Mischung der folgenden Zusammensetzung: 100 phr Ethylen-Propylen-Dienkautschuk
50 - 150 phr Kieselsäure/Ruß
10 - 100 phr Weichmacher
2 - 15 phr peroxidisches Vernetzungsmittel
5 - 30 phr sonstige Additive

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Bei den in der Mischung eingesetzten sonstigen Additiven kann es sich z. B. um Alterungsschutzmittel oder Verarbeitungshilfsmittel handeln.

Ein derartiges Verbundmaterial zeichnet sich durch eine besonders hohe Wasserdampfdiffusionsdichtigkeit aus und kann hervorragend zu flexiblen Behältern für die Speicherung von Wasser, insbesondere Heißwasser, verarbeitet werden. Die Behälter lassen sich vor dem Befüllen zusammenfalten und können dann auch in verwinkelte Keller gebracht werden. Die Robustheit des Verbundmaterials schützt es vor Rissen und Schlitzen. Die Behälter können in ihrer Form den örtlichen Gegebenheiten sehr genau angepasst werden, beispielsweise können Ausstülpungen oder blasenförmige Erweiterungen vorgesehen werden, so dass der vorhandene Raum optimal genutzt werden kann.

## Patentansprüche

1. Verbundmaterial (1), aufweisend zumindest folgenden Schichtaufbau in der angegebenen Reihenfolge:
- eine erste Elastomerlage (4), basierend auf einem unpolaren Kautschuk,
- eine erste Kunststofflage (3), basierend auf einem Kunststoff mit einem Schmelzpunkt von 80 bis 180 °C,
- ggf. eine erste Klebstoffschicht,
- eine Metallfolie (2),
- ggf. eine zweite Klebstoffschicht,
- eine zweite Kunststofflage (3`), basierend auf einem Kunststoff mit einem Schmelzpunkt von 80 bis 180 °C,
- eine zweite Elastomerlage (4'), basierend auf einem unpolaren Kautschuk, **dadurch gekennzeichnet, dass** der unpolare Kautschuk ein Ethylen-Propylen-Dienkautschuk oder ein Ethylen-Propylen-Kautschuk ist.

2. Verbundmaterial (1) nach Anspruch 1, **dadurch gekennzeichnet, dass** die Metallfolie (2) eine Aluminiumfolie ist.

3. Verbundmaterial (1) nach Anspruch 1 oder 2, **dadurch gekennzeichnet, dass** die Metallfolie (2) eine Schichtdicke von 0,005 bis 0,1 mm aufweist.

4. Verbundmaterial (1) nach zumindest einem der vorhergehenden Ansprüche, **dadurch gekennzeichnet, dass** der Kunststoff der Kunststoftlagen (3,3') einen Schmelzpunkt von 90 bis 130 °C aufweist.

5. Verbundmaterial (1) nach Anspruch 4, **dadurch gekennzeichnet, dass** der Kunststoff ein Polyethylen ist.

6. Verbundmaterial (1) nach zumindest einem der vorhergehenden Ansprüche, **dadurch gekennzeichnet, dass** die Kunststofflagen (3, 3') eine Schichtdicke von 5 bis 100 µm aufweisen.

7. Verbundmaterial (1) nach zumindest einem der vorhergehenden Ansprüche, **dadurch gekennzeichnet, dass** der unpolare Kautschuk peroxidisch vernetzt ist.

8. Verbundmaterial (1) nach zumindest einem der vorhergehenden Ansprüche, **dadurch gekennzeichnet, dass** die Elastomerlagen (4, 4`) eine Schichtdicke von 0,1 bis 10 mm aufweisen.

9. Verbundmaterial (1) nach Anspruch 8, **dadurch gekennzeichnet, dass** die Elastomerlagen (4, 4') eine Schichtdicke von 0,5 bis 3 mm aufweisen.

10. Verwendung des Verbundmaterials (1) nach einem der Ansprüche 1 bis 9 für flexible Behälter, insbesondere für die Lagerung von Heißwasser.

## Claims

1. Composite material (1), having at least the following layer structure in the sequence stated:
- a first elastomer layer (4), based on a non-polar rubber,
- a first plastics layer (3), based on a plastic with a melting point of from 80 to 180°C,
- optionally a first adhesive layer,
- a metal foil (2),
- optionally a second adhesive layer,
- a second plastics layer (3'), based on a plastic with a melting point of from 80 to 180°C,
- a second elastomer layer (4'), based on a non-polar rubber,
**characterized in that** the non-polar rubber is an ethylene-propylene-diene rubber or an ethylene-propylene rubber.

2. Composite material (1) according to Claim 1, **characterized in that** the metal foil (2) is an aluminium foil.

3. Composite material (1) according to Claim 1 or 2, **characterized in that** the thickness of the metal foil (2) is from 0.005 to 0.1 mm.

4. Composite material (1) according to at least one of the preceding claims, **characterized in that** the melting point of the plastic of the plastics layers (3, 3') is from 90 to 130°C.

5. Composite material (1) according to Claim 4, **characterized in that** the plastic is a polyethylene.

6. Composite material (1) according to at least one of the preceding claims, **characterized in that** the thickness of the plastics layers (3, 3') is from 5 to 100 µm.

7. Composite material (1) according to at least one of the preceding claims, **characterized in that** the non-polar rubber has been peroxidically crosslinked.

8. Composite material (1) according to at least one of the preceding claims, **characterized in that** the thickness of the elastomer layers (4, 4') is from 0.1 to 10 mm.

9. Composite material (1) according to Claim 8, **characterized in that** the thickness of the elastomer layers (4, 4') is from 0.5 to 3 mm.

10. Use of the composite material (1) according to any of Claims 1 to 9 for flexible containers, in particular for the storage of hot water.

## Revendications

1. Matériau composite (1), présentant au moins la structure à couches suivante dans l'ordre indique :
- une première couche d'élastomère (4), à base d'un caoutchouc non polaire,
- une première couche de matériau synthétique (3), à base d'un matériau synthétique présentant un point de fusion de 80 à 180°C,
- le cas échéant une première couche d'adhésif,
- une feuille métallique (2),
- le cas échéant une deuxième couche d'adhésif,
- une deuxième couche de matériau synthétique (3'), à base d'un matériau synthétique présentant un point de fusion de 80 à 180°C,
- une deuxième couche d'élastomère (4'), à base d'un caoutchouc non polaire, **caractérisé**
**en ce que** le caoutchouc non polaire est un caoutchouc d'éthylène-propylène-diène ou un caoutchouc d'éthylène-propylène.

2. Matériau composite (1) selon la revendication 1, **caractérisé en ce que** la feuille métallique (2) est une feuille d'aluminium.

3. Matériau composite (1) selon la revendication 1 ou 2, **caractérisé en ce que** la feuille métallique (2) présente une épaisseur de couche de 0,005 à 0,1 mm.

4. Matériau composite (1) selon au moins l'une quelconque des revendications précédentes, **caractérisé en ce que** le matériau synthétique des couches de matériau synthétique (3, 3') présente un point de fusion de 90 à 130°C.

5. Matériau composite (1) selon la revendication 4, **caractérisé en ce que** le matériau synthétique est un polyéthylène.

6. Matériau composite (1) selon au moins l'une quelconque des revendications précédentes, **caractérisé en ce que** les couches de matériau synthétique (3, 3') présentent une épaisseur de couche de 5 à 100 µm.

7. Matériau composite (1) selon au moins l'une quelconque des revendications précédentes, **caractérisé en ce que** le caoutchouc non polaire est réticulé par un peroxyde.

8. Matériau composite (1) selon au moins l'une quelconque des revendications précédentes, **caractérisé en ce que** les couches d'élastomère (4, 4') présentent une épaisseur de couche de 0,1 à 10 mm.

9. Matériau composite (1) selon la revendication 8, **caractérisé en ce que** les couches d'élastomère (4, 4') présentent une épaisseur de couche de 0,5 à 3 mm.

10. Utilisation du matériau composite (1) selon l'une quelconque des revendications 1 à 9 pour des récipients souples, en particulier pour l'entreposage d'eau chaude.
